# EUROPÄISCHE PATENTSCHRIFT

(11) **EP 1 140 947 B1**
(45) Veröffentlichungstag und Bekanntmachung des Hinweises auf die Patenterteilung: **12.03.2003**
(21) Anmeldenummer: 99963568.3
(22) Anmeldetag: 17.12.1999
(51) Int. Cl.: C07F 5/02, C07F 5/06

(54) **VERFAHREN ZUR HERSTELLUNG VON MONO- ODER DI-ORGANO-BORANEN**
METHOD FOR PRODUCING MONO-ORGANOBORANES OR DI-ORGANOBORANES
PROCEDE DE PREPARATION DE MONO-ORGANOBORANES OU DE DI-ORGANOBORANES

(30) Priorität: 19.12.1998 DE 19858829
(43) Veröffentlichungstag der Anmeldung: 10.10.2001
(73) Patentinhaber: Basell Polyolefine GmbH, 67056 Ludwigshafen (DE)
(72) Erfinder: SCHOTTEK, Jörg, D-60486 Frankfurt (DE); BECKER, Patricia, D-64546 Mörfelden-Walldorf (DE); KÜLLMER, Iris, D-65929 Frankfurt (DE)
(74) Vertreter: Colucci, Giuseppe
(86) Internationale Anmeldenummer: EP9910032
(87) Internationale Veröffentlichungsnummer: WO00037476

(56) Entgegenhaltungen:
- CHEMICAL ABSTRACTS, vol. 93, no. 9, 1. September 1980 (1980-09-01) Columbus, Ohio, US; abstract no. 95391, PASYNKIEWICZ, STANISLAW ET AL: "Stabilized dialkylaluminumhydroxides" XP002132402 & PL 105 929 P (POLITECHNIKA WARSZAWSKA, POL.) 30. November 1979 (1979-11-30)

## Beschreibung

Die vorliegende Erfindung betrifft ein neues Verfahren zur Herstellung von perhalogenierten Mono- oder Di-organo-boranen, welches diese Verbindungen unter technisch gut durchführbaren Bedingungen zugänglich macht.

Im Stand der Technik werden verschiedene Methoden zur Darstellung von Diorgano-hydroxy-borane beschrieben. So beschreiben Davidson et al. die Herstellung von Diorgano-hydroxy-boranen aus Dioxyorgano-boranen mit Grignard-Verbindungen (J.M. Davidson et al., French Soc, 1960, 191). Die Herstellung von Diorgano-hydroxy-boranen aus Lewisbase-Diorgano-oxy-boranen ist ebenfalls bekannt. Hierzu werden mit Hilfe wäßriger Mineralsäuren Diaryl-hydroxyborane unter Anbindung von 2-Amino-ethanol als Salze hergestellt. Die saure Hydrolyse ergibt die gewünschten Diorgano-hydroxy-borane (R.L. Letsinger, I. Skoog, J. Am. Chem. Soc., 77, 1955, 2491).

So läßt sich z.B. aus Trimethoxyboroxin und 2 Äquivalenten Phenylmagnesiumbromid nach anschließender Umsetzung mit Ethanolamin (2-Aminoethoxy)-bis(phenyl)boran isolieren, aus dem das entsprechende Diphenyl-hydroxy-boran wie beschrieben synthetisiert wird (T.P. Povlock, W.T. Lippincott, J. Am. Chem. Soc., 80, 1958, 5409). Triorganooxyborane reagieren mit 2 Äquivalenten Grignard-Verbindung und anschließenaer Hydrolyse zu den gewünschten Diorgano-hydroxy-boranen (R.M. Washburn, F.A. Billig, M. Bloom, C.F. Albright, E. Levens, Advan. Chem. Ser., 32, 208, 1961).

Teil- oder perhalogenierte Diphenyl-hydroxy-borane sind bisher über diese Routen nicht zugänglich. So gelingt die Darstellung von Di(pentafluorphenyl)-hydroxy-boran durch Hydrolyse von Di(pentafluorphenyl)-chlor-boran in Aceton (R.D. Chambers, T. Chivers, J. Chem. Soc., 1965, 3933). Die Herstellung von Di(pentafluorphenyl)-chlor-boran erfolgt durch Umsetzung von Dimethyl-bis(pentafluorphenyl)-zinn mit Bortrichlorid unter erhöhtem Druck im Bombenrohr und ist daher in dieser Form für den technischen Einsatz unbrauchbar. Zusätzlich sind die mit Hilfe von diesem Verfahren erhaltenen Ausbeuten an Di(pentafluorphenyl)-chlor-boran, das als Vorstufe zur Herstellung von Di(pentafluorphenyl)-hydroxy-boran eingesetzt wird, mit 36 % äußerst niedrig (R.D. Chambers, T. Chivers, J. Chem. Soc., 1965, 3933). Die Synthese von Di(pentafluorphenyl)-hydroxy-boran aus Di(pentafluorphenyl)-chlor-boran in Aceton mit stöchiometrischen Mengen Wasser ist mit einer 49 %igen Ausbeute ebenfalls unzureichend.

Chemical Abstracts, Vol. 93, No. 9, 1980 (Abstract No. 95391) beschreibt die Herstellung stabilisierter Dialkylaluminumhydroxide durch Behandlung der entsprechenden Trialkylaluminumverbindungen in einem Donorlösungsmittel mit Wasser bei einer Temperatur weniger als 0°C.

Organobor-Verbindungen zeichnen sich als effektive Co-Katalysatoren bei der Polymerisation von Olefinen mit Metallocenen aus (M. Bochmann, J. Chem. Soc., Dalton Trans, 1996, 255-270). Insbesondere teil- oder perhalogenierte Diorgano-hydroxy-borane dienen als Vorstufen zur Herstellung von entsprechenden Co-Katalysatoren.

Aus diesem Grund besteht ein hoher Bedarf an einem einfachen Verfahren zur Herstellung der Eingangs erwähnten Verbindungen, das einerseits in einem technischen Maßstab durchgeführt werden kann, dabei die Vermeidung von Stannan-Verbindungen bei der Darstellung ermöglicht, und andererseits die Zielverbindung in guten Ausbeuten bereitstellt.

Es wurde nun überraschenderweise gefunden, daß Organohalogenarylboran-Verbindungen durch Hydrolyse bei erhöhten Temperaturen in fast quantitativer Ausbeute in die entsprechenden Diorganohydroxy-Verbindungen überführt werden können.

Gegenstand der vorliegenden Erfindung ist ein Verfahren zur Herstellung von Verbindungen der Formel (I)

(C₆R¹ ₅)₁₊ₗM(XR⁹ ₚ)₂₋ₗ (I)

worin
- R¹: unabhängig voneinander gleich oder verschieden ein Wasserstoffatom, ein Halogenatom, eine C₁-C₂₀-kohlenstoffhaltige Gruppe wie (C₁-C₂₀)-Alkyl, (C₆-C₁₄)-Aryl, (C₁-C₁₀)-Alkoxy, (C₂-C₁₀)-Alkenyl, (C₇-C₂₀)-Arylalkyl, (C₇-C₂₀)-Alkylaryl, (C₆-C₁₀)-Aryloxy, (C₁-C₁₀)-Halogenalkyl, (C₆-C₁₀)-Halogenaryl, (C₂-C₁₀)-Alkinyl oder C₃-C₂₀-Alkylsilyl,
- M: Bor ist,
- X: unabhängig voneinander gleich oder verschieden und für ein Element der V. oder VI. Hauptgruppe des Periodensystems der Elemente, bevorzugt Sauerstoff und Stickstoff, steht
- R⁹: ein Wasserstoffatom oder eine C₁-C₂₀-kohlenstoffhaltige Gruppe wie (C₁-C₂₀)-Alkyl oder (C₆-C₁₄)-Aryl ist,
- p: eine ganze Zahl 1 oder 2 ist,
- l: eine ganze Zahl 0 oder 1 ist,
durch Umsetzung einer Verbindung der Formel (II)

(C₆R¹ ₅)₁₊ₙM¹R² ₂₋ₙ (II)

worin
- R¹: für die unter Formel (I) aufgeführten Reste steht,
- M¹: Bor steht,
- R²: unabhängig voneinander gleich oder verschieden ein Wasserstoffatom, ein Halogenatom, eine C₁-C₂₀-kohlenstoffhaltige Gruppe wie (C₁-C₂₀)-Alkyl, (C₆-C₁₄)-Aryl oder (C₆-C₁₄)-Halogenaryl ist, besonders bevorzugt ein (C₆-C₈)-Fluoraryl, ganz besonders bevorzugt ein perfluorierter-Phenyl-Ring ist und
- n: eine ganze Zahl von 0 bis 2 ist
mit einer Verbindung der Formel (III)

B¹R³R⁴ (III)

worin
- R³,R⁴: unabhängig voneinander gleich oder verschieden ein Wasserstoffatom, ein Halogenatom, eine C₁-C₂₀-kohlenstoffhaltige Gruppe wie (C₁-C₂₀)-Alkyl, (C₆-C₁₄)-Aryl, (C₁-C₁₀)-Alkoxy, (C₂-C₁₀)-Alkenyl, (C₇-C₂₀)-Arylalkyl, (C₇-C₂₀)-Alkylaryl, (C₆-C₁₀)-Aryloxy, (C₁-C₁₀)-Halogenalkyl, (C₆-C₁₀)-Halogenaryl, (C₂-C₁₀)-Alkinyl, C₃-C₂₀-Alkylsilyl, eine -OR⁶₂-Gruppe, worin R⁶ eine C₁-C₂₀-kohlenstoffhaltige Gruppe wie (C₁-C₂₀)-Alkyl oder (C₆-C₁₄)-Aryl ist, oder ein oder mehrere Reste R³,R⁴ sind eine -NR⁷₂-Gruppe, worin R⁷ ein Wasserstoffatom, ein Halogenatom, eine C₁-C₂₀-kohlenstoffhaltige Gruppe wie (C₁-C₂₀)-Alkyl oder (C₆-C₁₄)-Aryl ist,
- B¹: ein Element der V. oder VI. Hauptgruppe des Periodensystems der Elemente, bevorzugt Sauerstoff und Stickstoff, besonders bevorzugt Sauerstoff ist,
oder alternativ oder zusätzlich mit einem anorganischen Salz der allgemeinen Formel (IV),

Zⱼ(VYₕ)ᵢ * B¹R³R⁴ (IV)

worin,
- R³,R⁴: ein Wasserstoffatom sind,
- B¹: ein Element der V. oder VI. Hauptgruppe des Periodensystems der Elemente, bevorzugt Sauerstoff und Stickstoff, besonders bevorzugt Sauerstoff ist
- Z: ein Element der I, II, III, IV Hauptgruppe sowie ein Elemence der I-VIII Nebengruppe, sowie Mischungen aus diesen Gruppen sein kann oder (NH₄) ist,
- V: ein Element der IV, V, VI und VII Hauptgruppe sowie ein Elemente der I-VIII Nebengruppe ist,
- Y: eine Element der IV, V, VI und VII Hauptgruppe sowie ein Elemente der I-VIII Nebengruppe ist,
- j, h, i: eine Zahl zwischen 0-1000 ist,
bei Temperaturen oberhalb der Raumtemperatur, zur Verbindung der Formel (I).

Das anfallende Produkt der Formel (I) kann gegebenenfalls durch geeignete Maßnahmen weiter aufgearbeitet werden. Dies kann beispielsweise durch Extraktion der Verbindung (I) mit aprotischen, aliphatischen und/oder aromatischen Kohlenwasserstoffen erfolgen, wobei gegebenenfalls vorhandene feste Rückstände abgetrennt werden können.

Nach erfolgter Extraktion wird das Extraktionsmittel abgetrennt und je nach gewünschtem Reinheitsgrad eine weitere Aufreinigung der Verbindung der Formel (I) durchgeführt.

Bevorzugte, nicht einschränkende Beispiele der Verbindung der Formel (III) sind Wasser und/oder Alkohole wie Methanol, Ethanol, Propanol oder Butanol, sowie Gemische derselben.

Bevorzugte, nicht einschränkende Beispiele der Verbindungen der Formel (IV) sind AlCl₃*6H₂O, Al(NO₃)₃*9H₂O, Al₂(SO₄)₃*18H₂O, NH₄Cr(SO₄)₂*12 H₂O, (NH₄)₂Fe(SO₄)₃*6H₂O, (NH₄)₂Fe(SO₄)₃*12H₂O, NH₄MgPO₄*6H₂O, (NH₄)₂SO₃*H₂O, (NH₄)W₇O₂₄*6H₂O, BaBr₂*2H₂O, Ba(ClO₃)₂* H₂O, Ba(NO₂)₂*H₂O, Cr(NO₃)₃*6H₂O, Cr₂(SO₄)₃*18H₂O, Na₂HPO₄*12 H₂O, Fe(NO₃)₃*9H₂O, FeSO₄*7H₂O, CdCl₂*2.5H₂O, KAl(SO₄)₂*12 H₂O, K₄[Fe(CN)₆]*3 H₂O, CuCl₂*2H₂O, Cu(NO₃)₂*3H₂O, Mg(NO₃)₂*6H₂O, MgSO₄*7H₂O, Na₂SO₃*7H₂O, NiSO₄*7H₂O, sowie Gemische derselben.

Mit Hilfe der erfindungsgemäßen Verfahrens sind insbesondere die durch die Formel (I) beschriebenen Verbindungen Bis(pentafluorphenyl)-hydroxyboran, Di(phenyl) -hydroxyboran, Di(o-tolyl)-hydroxyboran, Di(p-anisyl)-hydroxyboran, Di(nonaflourobiphenyl)-hydroxyboran, Di(triflouromethyl)phenyl-hydroxyboran Di(p-biphenyl)-hydroxyboran, Di(p-chlorphenyl)-hydroxyboran, Di(p-fluor-1-Naphthyl-phenyl-hydroxyboran und Pentafluorphenyl-dihydroxyboran in technischen Mengen zugänglich.

Die Durchführung des erfindungsgemäßen Verfahrens wird nachfolgend näher beschrieben:

Zunächst werden eine oder mehrere Verbindung der Formel (II) in einem Reaktionsgefäß vorgelegt. Die Verbindungen können entweder in einem Lösemittel gelöst oder suspendiert sein, oder aber auch in Substanz vorliegen. Als Lösemittel dienen aliphatische oder aromatische Kohlenwasserstoffe wie n-Pentan, Isopentan, n-Hexan, n-Heptan, Cyclohexan, Isododekan, n-Octan, n-Nonan, n-Decan, Petroleumether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol etc. sowie Mischungen von diesen. Die Vorlage erfolgt bei Temperaturen zwischen -100°C und 300°C, bevorzugt zwischen -80°C und 200°C, insbesondere bevorzugt bei Temperaturen zwischen 0°C und 150°C. Die Verbindung der Formel (II) sollte vorteilhafterweise in flüssiger Phase vorliegen.

Anschließend erfolgt die Zugabe einer oder mehrerer Verbindung der Formel (III) beispielsweise wasser und/oder Alkohole und/oder der Verbindung (IV) wie anorganische Salze in denen die Verbindung der Formel (III) in gebundener Form enthalten ist. Diese können ebenfalls in einem Lösemittel gelöst oder suspendiert sein können aber auch in Substanz vorliegen. Als Lösemittel dienen die bereits oben beschriebenen, vorzugsweise wird das gleiche Lösemittel verwendet. Die Zugabe erfolgt über einen Zeitraum von 1 Minute bis zu 96 Stunden. Bevorzugt ist eine Zugabe innerhalb von 10 Minuten bis zu 8 Stunden. Die Temperatur der Vorlage liegt bei der Zugabe zwischen -100°C und 200°C. Bevorzugt sind Temperaturen zwischen -80°C und 40°C. Besonders bevorzugt sind Temperaturen zwischen 0°C und 150°C. Die Temperatur wird so gewählt, daß zumindest ein Reaktionspartner in flüssiger Phase vorliegen. Des weiteren wird die Umsetzung bei Normaldruck durchgeführt, sie kann jedoch auch bei erhöhtem Druck durchgeführt werden, was jedoch entsprechende Reaktoren voraussetzt. Je nach physikalische Eigenschaften der Verbindungen der Formel (II) wird mit einem Intensivkühler gekühlt, der gegebenenfalls mit Kältemitteln betrieben wird.

Bei dem erfindungsgemäßen Verfahren kann die Zugabe der Verbindung der Formel (III) und/oder (IV) zur Verbindung der Formel (II) zunächst quantitativ erfolgen, wobei anschließend auf Temperaturen oberhalb der Raumtemperatur erwärmt wird. Sollte die Vorlage bei Zugabe der Verbindung der Formel (III) und/oder (IV) zur Verbindung der Formel (II) bereits bei Temperaturen oberhalb der Raumtemperatur erfolgen, setzt die Reaktion bereits mit der Zugabe ein. Zur Vervollständigung der Reaktion kann eine weitere Erhöhung der Temperatur und/oder eine entsprechende Nachdosierung der Verbindung der Formel (III) und/oder (IV) zur Verbindung der Formel (II) erfolgen. Die Reihenfolge in Bezug auf die Zugabe der Verbindung der Formel (III) und/oder (IV) zur Verbindung der Formel (II) und die anschließende Erwärmung ist im wesentlichen unkritisch. Je nach Reaktivität der Verbindung der Formel (II) kann die Zugabe der Verbindung der Formel (III) und/oder (IV) zur bereits erwärmten Vorlage enthaltend die Verbindung der Formel (II) erfolgen.

Das stöchiometrische Verhältnis zwischen Verbindungen der Formel (II) und Verbindungen der Formel (III) und/oder (IV) liegt zwischen 1 : 1000 und 100 : 1. Bevorzugt ist ein stöchiometrisches Verhältnis zwischen Verbindungen der Formel (II) und Verbindungen der Formel (III) zwischen 1 : 100 und 1 : 1, besonders bevorzugt ist 1 : 1,2 für die Verbindung der Formel (III) und 1 : 1,7 bei Verbindungen der Formel (IV) bezogen auf gebundenes Wasser.

Die Reaktionstemperatur liegt oberhalb der Raumtemperatur (20°C), bevorzugt zwischen 30°C und 200°C, besonders bevorzugt zwischen 40°C und 180°C, insbesondere zwischen 50°C und 170°C.

Mindestens ein Reaktionspartner liegt vorzugsweise in flüssiger Phase vor. Besonders bevorzugt wird die Reaktion unter Rückfluß durchgeführt. Es ist weiterhin vorteilhaft, wenn die Badtemperatur des Heizbades zwischen 50°C und 200°C beträgt, so daß die Reaktionsdauer erheblich verkürzt wird. Die Reaktionsdauer liegt in Abhängigkeit von der gewählten Reaktionstemperatur zwischen 1 Minute und bis zu 96 Stunden. Bevorzugt ist eine Reaktionszeit von 10 Minuten bis zu 8 Stunden.

Die zur Aufarbeitung des Reaktionsgemisches eingesetzten Extraktionsmittel sind aprotische, aliphatische oder aromatische Kohlenwasserstoffe oder Gemische derselben, wodurch gegebenenfalls entstandene Nebenprodukte von der Zielverbindung der Formel (I) abgetrennt werden. Geeignete Extraktionsmittel sind beispielsweise n-Pentan, Isopentan, n-Hexan, n-Heptan, Cyclohexan, Isododekan, n-Octan, n-Nonan, n-Decan, Petreleomether, Toluol, Benzol, o-Xylol, m-Xylol, p-Xylol, 1,2,3-Trimethylbenzol, 1,2,4-Trimethylbenzol, 1,2,5-Trimethylbenzol, 1,3,5-Trimethylbenzol, Ethylbenzol, Propylbenzol sowie Mischungen von diesen. Bei Verwendung der Verbindungen der Formel (IV) kann es gegebenenfalls notwendig sein, einen zusätzlichen Filtrationsschritt auszuführen um die anorganischen Zersetzungsprodukte aus dem Reaktionsgemisch zu entfernen.

Die bereits aufgereinigte Verbindung der Formel (I) kann je nach Anforderungsgrad mittels bekannter Technologien wie z.B. Destillation, Umkristallisation, Extraktion oder Sublimation weiter aufgereinigt werden.

Die Erfindung wird durch folgende, die Erfindung jedoch nicht einschränkenden Beispiele erläutert.

Allgemeine Angaben: Herstellung und Handhabung der Verbindungen erfolgten unter Ausschluß von Luft und Feuchtigkeit unter Argonschutz (Schlenk-Technik). Alle benötigten Lösemittel wurden vor Gebrauch durch mehrstündiges Sieden über geeignete Trockenmittel und anschließende Destillation unter Argon absolutiert.

### Beispiel 1: Variante A zur Darstellung von Bis(pentafluorphenyl)-hydroxyboran

### a) Synthese von (Trispentaflourophenyl)boran- x 3H₂O (1)

20 g (39 mmol) (Trispentafluorophenyl)boran werden in 150 ml Pentan suspendiert und anschließend unter Rückfluß mit einer Lösung aus 1.8 ml (97.5 mmol) Wasser in 40 ml Toluol innerhalb von 30 Minuten versetzt. Man rührt anschließend zwei Stunden unter Rückfluß nach. Anschließend wird die Lösung auf 0°C abgekühlt. Innerhalb von 20 Minuten fällt das Produkt als weißer Feststoff aus. Das Produkt wird isoliert und im Ölpumpenvakuum getrocknet. Man erhält 20.5 (91 %) des farblosen (Trispentaflourophenyl)boran- x 3H₂O. ¹H-NMR(C₆D₆, 400 MHz): -135.0 (m, 6 F, o-B(C₆F₅)₂), -154.5 (m, 3 F, p-B(C₆F₅)₂), -162.5 (m, 6 F, m-B(C₆F₅)₂) ppm.

### b) Synthese von Bis(pentafluorphenyl)-hydroxyboran

20.5 g (36 mmol) des unter a) dargestellten (Trispentaflourophenyl)boran- x 3H₂O-Addukts (1) werden in 150 ml Toluol gelöst und 2.5 Stunden unter Rückfluß gekocht. Nach dieser Zeit wird das Lösungsmittel im Ölpumpenvakuum abgezogen. Der Rückstand wird anschließend im Ölpumpenvakuum getrocknet und braucht nicht weiter aufgereinigt zu werden. Man erhält 8.7 (67 %) des farblosen Bis(pentafluorphenyl)-hydroxyborans. Boroxin-Gehalt liegt bei 10 %. ¹H-NMR(C₆D₆, 400 MHz): -133.1 (m, 4 F, o-B(C₆F₅)₂), -147.9 (m, 2 F, p-B(C₆F₅)₂), -161.1 (m, 4 F, m-B(C₆F₅)₂) ppm.

### Beispiel 2: Variante B zur Darstellung von Bis(pentafluorphenyl)-hydroxyboran

20 g (39 mmol) (Trispentafluorophenyl)boran werden in 150 ml Heptan suspendiert und anschließend unter Rückfluß mit einer Lösung aus 1.8 ml (97.5 mmol) Wasser in 40 ml Toluol innerhalb von 30 Minuten versetzt. Man rührt anschließend fünf Stunden unter Rückfluß nach. Anschließend wird die Lösung auf 0°C abgekühlt. Innerhalb von 30 Minuten fällt das Produkt als weißer Feststoff aus. Das Produkt wird isoliert und dreimal mit je 50 ml Pentan gewaschen und anschließend im Ölpumpenvakuum getrocknet. Man erhält 11.5 (80 %) des farblosen Bis(pentafluorphenyl)-hydroxyborans. Boroxin-Gehalt liegt bei 10 %. ¹H-NMR(C₆D₆, 400 MHz): -133.1 (m, 4 F, o-B(C₆F₅)₂), -147.9 (m, 2 F, p-B(C₆F₅)₂), -161.1 (m, 4 F, m-B(C₆F₅)₂) ppm.

### Beispiel 3: Variante C zur Darstellung von Bis(pentafluorphenyl)-hydroxyboran

20 g (39 mmol) (Trispentafluorophenyl)boran werden in 150 ml Toluol vorgelegt und anschließend auf 100 °C erwärmt. Zu dieser Lösung werden innerhalb von 30 Minuten 1.8 ml (97.5 mmol) Wasser in 40 ml Toluol zugetropft. Man rührt anschließend zwei Stunden bei 100 °C nach. Nach dieser Zeit wird das Lösungsmittel im Ölpumpenvakuum abgezogen. Der Rückstand braucht nicht weiter aufgereinigt werden. Man erhält 12.6 (89 %) des farblosen Bis(pentafluorphenyl)-hydroxyborans. Boroxin-Gehalt liegt bei 5 %. ¹H-NMR(C₆D₆, 400 MHz): -133.1 (m, 4 F, o-B(C₆F₅)₂), -147.9 (m, 2 F, p-B(C₆F₅)₂), -161.1 (m, 4 F, m-B(C₆F₅)₂) ppm.

### Beispiel 4: Variante D zur Darstellung von Bis(pentafluorphenyl)-hydroxyboran (mit anorganischem Salz)

676.9 g einer toluolischen Lösung von Tris-(pentafluorophenyl)-boran (10.4 Gew.% = 70.37 g) werden mit 8.8 g gemörsertem Aluminiumsulfatoctadecahydarat versetzt und 15.5 Stunden unter Rückfluß gerührt. Von der heißen Reaktionslösung trennt man das unlösliche Aluminiumsulfat ab, und entfernt das Lösungsmittel des Filtrats im Ölpumpenvakuum. Der Rückstand wird in 700 ml Toluol aufgenommen, 30 Minuten bei Raumtemperatur gerührt, und anschließend der unlösliche Rückstand über einer G4-Fritte abgetrennt. Das Lösungsmittel des Filtrats wird im Ölpumpenvakuum entfernt. Der nun bräunliche Rückstand wird mit 200 ml Heptan aufgenommen und eine weitere Stunden gerührt. Danach wird filtriert und der erhaltene Rückstand mit 2 x 30 ml Heptan nachgewaschen. Der auf der G4-Fritte verbleibenden weiße Feststoff wir im Ölpumpenvakuum getrocknet. Man erhält 45.6 g (91 %) Bis-(pentafluororphenyl)borinsäure.

Boroxin-Gehalt liegt bei weniger als 1 %. ¹H-NMR(C₆D₆, 400 MHz): -133.1 (m, 4 F, o-B(C₆F₅)₂), -147.9 (m, 2 F, p-B(C₆F₅)₂), -161.1 (m, 4 F, m-B(C₆F₅)₂) ppm.

## Patentansprüche

1. Verfahren zur Herstellung von Verbindungen der Formel (I)
(C₆R¹ ₅)₁₊ₗM(XR⁹ ₚ)₂₋ₗ (I)
worin
R¹ unabhängig voneinander gleich oder verschieden ein Wasserstoffatom, ein Halogenatom, eine C₁-C₂₀-kohlenstoffhaltige Gruppe,
M Bor ist,
X unabhängig voneinander gleich oder verschieden und für ein Element der V. oder VI. Hauptgruppe des Periodensystems der Elemente steht
R⁹ ein wasserstoffatom oder eine C₁-C₂₀-kohlenstoffhaltige Gruppe ist,
p eine ganze Zahl 1 oder 2 ist,
l eine ganze Zahl 0 oder 1 ist,
durch Umsetzung einer Verbindung der Formel (II)
(C₆R¹ ₅)₁₊ₙM¹R² ₂₋ₙ (II)
worin
R¹ für die unter Formel (I) aufgeführten Reste steht,
M¹ Bor ist,
R² unabhängig voneinander gleich oder verschieden ein Wasserstoffatom, ein Halogenatom, eine C₁-C₂₀-kohlenstoffhaltige Gruppe ist und
n eine ganze Zahl von 0 bis 2 ist
mit einer Verbindung der Formel (III)
B¹R³R⁴ (III)
R³,R⁴ unabhängig voneinander gleich oder verschieden ein Wasserstoffatom, ein Halogenatom, eine C₁-C₂₀-kohlenstoffhaltige Gruppe, eine -OR⁶₂-Gruppe, worin R⁶ eine C₁-C₂₀-kohlenstoffhaltige Gruppe ist, oder ein oder mehrere Reste R³,R⁴ sind eine -NR⁷₂-Gruppe, worin R⁷ ein Wasserstoffatom, ein Halogenatom, eine C₁-C₂₀-kohlenstoffhaltige Gruppe ist,
B¹ ein Element der V. oder VI. Hauptgruppe des Periodensystems der Elemente ist,
oder alternativ oder zusätzlich mit einem anorganischen Salz der allgemeinen Formel (IV),
Zⱼ(VYₕ)ᵢ * B¹R³R⁴ (IV)
worin,
R³,R⁴ ein Wasserstoffatom sind,
B¹ ein Element der V. oder VI. Hauptgruppe des Periodensystems der Elemente, bevorzugt Sauerstoff und Stickstoff, besonders bevorzugt Sauerstoff ist
Z ein Element der I, II, III, IV Hauptgruppe sowie ein Elemente der I-VIII Nebengruppe, sowie Mischungen aus diesen Gruppen sein kann oder (NH₄) ist,
V ein Element der IV, V, VI und VII Hauptgruppe sowie ein Elemente der I-VIII Nebengruppe ist,
Y eine Element der IV, V, VI und VII Hauptgruppe sowie ein Elemente der I-VIII Nebengruppe ist,
j, h, i eine Zahl zwischen 0-1000 ist,
bei Temperaturen oberhalb der Raumtemperatur, zur Verbindung der Formel (I).

2. Verfahren gemäß Anspruch 1, **dadurch gekennzeichnet, daß** in Verbindungen der Formel (III)
R¹ unabhängig voneinander gleich oder verschieden ein Wasserstoffatom, ein Halogenatom, (C₁-C₂₀)-Alkyl, (C₆-C₁₄)-Aryl, (C₁-C₁₀)-Alkoxy, (C₂-C₁₀)-Alkenyl, (C₇-C₂₀)-Arylalkyl, (C₇-C₂₀)-Alkylaryl, (C₆-C₁₀)-Aryloxy, (C₁-C₁₀)-Halogenalkyl, (C₆-C₁₀)-Halogenaryl, (C₂-C₁₀)-Alkinyl oder C₃-C₂₀-Alkylsilyl,
M Bor ist,
X unabhängig voneinander gleich oder verschieden Sauerstoff und Stickstoff ist,
R⁹ ein Wasserstoffatom, (C₁-C₂₀)-Alkyl oder (C₆-C₁₄)-Aryl ist,
p eine ganze Zahl 1 oder 2 ist,
l eine ganze Zahl 0 oder 1 ist,
M¹ Bor ist,
R² unabhängig voneinander gleich oder verschieden ein wasserstoffatom, ein Halogenatom, (C₁-C₂₀)-Alkyl, (C₆-C₁₄)-Aryl oder (C₆-C₁₄)-Halogenaryl ist und
n eine ganze Zahl von 0 bis 2 ist,
R³,R⁴ unabhängig voneinander gleich oder verschieden ein Wasserstoffatom, ein Halogenatom, (C₁-C₂₀)-Alkyl, (C₆-C₁₄)-Aryl, (C₁-C₁₀)-Alkoxy, (C₂-C₁₀)-Alkenyl, (C₇-C₂₀)-Arylalkyl, (C₇-C₂₀)-Alkylaryl, (C₆-C₁₀)-Aryloxy, (C₁-C₁₀)-Halogenalkyl, (C₆-C₁₀)-Halogenaryl, (C₂-C₁₀)-Alkinyl, C₃-C₂₀-Alkylsilyl, eine -OR⁶₂-Gruppe, worin R⁶ (C₁-C₂₀)-Alkyl oder (C₆-C₁₄)-Aryl ist, oder ein oder mehrere Reste R³,R⁴ sind eine -NR⁷₂-Gruppe, worin R⁷ ein Wasserstoffatom, ein Halogenatom, (C₁-C₂₀)-Alkyl oder (C₆-C₁₄)-Aryl ist,
B¹ Sauerstoff und Stickstoff ist.

3. Verfahren gemäß Anspruch 1 bis 2, **dadurch gekennzeichnet, daß** in Verbindungen der Formel (IV)
R³,R⁴ ein Wasserstoffatom ist,
B¹ Sauerstoff und Stickstoff, bevorzugt Sauerstoff ist,
Z ein Element der I, II, III, IV Hauptgruppe sowie ein Element der I-VIII Nebengruppe, sowie Mischungen aus diesen Gruppen sein kann oder (NH₄) ist,
V ein Element der IV, V, VI und VII Hauptgruppe sowie ein Element der I-VIII Nebengruppe ist,
Y ein Element der IV, V, VI und VII Hauptgruppe sowie ein Element der I-VIII Nebengruppe ist,
j,h,i eine Zahl zwischen 0-100 ist.

4. Verfahren gemäß Anspruch 1 bis 3, **dadurch gekennzeichnet, daß** M, M¹ für Bor stehen und R² (C₆-C₈)-Fluoraryl, insbesondere ein perfluorierter-Phenyl-Ring, ist.

5. Verfahren gemäß einem der Ansprüche 1 bis 4, **dadurch gekennzeichnet, daß** als Verbindung der Formel (III) Wasser oder Alkohole sowie Gemische derselben eingesetzt werden.

6. Verfahren gemäß einem der Ansprüche 1 bis 5, **dadurch gekennzeichnet, daß** als Verbindung der Formel (IV) anorganische Salze in denen Wasser in gebundener Form vorliegt, sowie Gemische derselben, eingesetzt werden.

7. Verfahren gemäß einem der Ansprüche 1 bis 6, **dadurch gekennzeichnet, daß** die Reaktionstemperatur zwischen 30°C und 200°C liegt.

8. Verfahren gemäß einem der Ansprüche 1 bis 7, **dadurch gekennzeichnet, daß** die Verbindung der Formel (I) für Bis(pentafluorphenyl)-hydroxyboran, Di(phenyl) -hydroxyboran, Di(otolyl)-hydroxyboran, Di(p-anisyl)-hydroxyboran, Di(nonaflouro-biphenyl)-hydroxyboran, Di(triflouromethyl)phenylhydroxyboran Di(p-biphenyl)-hydroxyboran, Di(p-chlorphenyl)-hydroxyboran, Di(p-fluor-1-Naphthyl-phenyl-hydroxyboran oder Pentafluorphenyl-dihydroxyboran steht.

## Claims

1. A process for preparing a compound of the formula (I)
(C₆R¹ ₅)₁₊ₗM(XR⁹ ₚ)₂₋ₗ (I)
where
R¹ are identical or different and are each, independently of one another, a hydrogen atom, a halogen atom or a C₁-C₂₀ group,
M is boron,
X are identical or different and are each, independently of one another, an element of main group V or VI of the Periodic Table of the Elements,
R⁹ is a hydrogen atom or a C₁-C₂₀ group,
p is 1 or 2,
l is 0 or 1,
by reacting a compound of the formula (II)
(C₆R¹ ₅)₁₊ₙM¹R² ₂₋ₙ (II)
where
R¹ is as defined under formula (I),
M¹ is boron,
R² are identical or different and are each, independently of one another, a hydrogen atom, a halogen atom or a C₁-C₂₀ group and
n is an integer from 0 to 2,
with a compound of the formula (III)
B¹R³R⁴ (III)
where
R³,R⁴ are identical or different and are each, independently of one another, a hydrogen atom, a halogen atom, a C₁-C₂₀ group, an -OR⁶₂ group, where R⁶ is a C₁-C₂₀ group, or one or more radicals R³, R⁴ form an -NR⁷₂ group, where R⁷ is a hydrogen atom, a halogen atom or a C₁-C₂₀ group,
B¹ is an element of main group V or VI of the Periodic Table of the Elements,
or alternatively or additionally with an inorganic salt of the formula (IV),
Zⱼ(VYₕ)ᵢ * B¹R³R⁴ (IV)
where
R³,R⁴ are each a hydrogen atom,
B¹ is an element of main group V or VI of the Periodic Table of the Elements, preferably oxygen or nitrogen, particularly preferably oxygen,
Z can be an element of main group I, II, III or IV or an element of transition groups I-VIII, or a mixture of elements from these groups, or is (NH₄),
V is an element of main group IV, V, VI or VII or an element of transition groups I-VIII,
Y is an element of main group IV, V, VI or VII or an element of transition groups I-VIII,
j, h, i are each a number in the range from 0 to 1000,
at a temperature above room temperature, to form the compound of the formula (I).

2. A process as claimed in claim 1, wherein, in the compounds of the formulae (I)-(III)
R¹ are identical or different and are each, independently of one another, a hydrogen atom, a halogen atom, C₁-C₂₀-alkyl, C₆-C₁₄-aryl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₁₀-haloalkyl, C₆-C₁₀-haloaryl, C₂-C₁₀-alkynyl or C₃-C₂₀-alkylsilyl,
M is boron,
X are identical or different and are each, independently of one another, oxygen or nitrogen,
R⁹ is a hydrogen atom, C₁-C₂₀-alkyl or C₆-C₁₄-aryl,
p is 1 or 2,
l is 0 or 1,
M¹ is boron,
R² are identical or different and are each, independently of one another, a hydrogen atom, a halogen atom, C₁-C₂₀-alkyl, C₆-C₁₄-aryl or C₆-C₁₄-haloaryl and
n is an integer from 0 to 2,
R³,R⁴ are identical or different and are each, independently of one another, a hydrogen atom, a halogen atom, C₁-C₂₀-alkyl, C₆-C₁₄-aryl, C₁-C₁₀-alkoxy, C₂-C₁₀-alkenyl, C₇-C₂₀-arylalkyl, C₇-C₂₀-alkylaryl, C₆-C₁₀-aryloxy, C₁-C₁₀-haloalkyl, C₆-C₁₀-haloaryl, C₂-C₁₀-alkynyl, C₃-C₂₀-alkylsilyl, an -OR⁶₂ group, where R⁶ is C₁-C₂₀-alkyl or C₆-C₁₄-aryl, or one or more radicals R³, R⁴ form an -NR⁷₂ group, where R⁷ is a hydrogen atom, a halogen atom, C₁-C₂₀-alkyl or C₆-C₁₄-aryl,
B¹ is oxygen or nitrogen.

3. A process as claimed in claim 1 or 2, wherein, in the compounds of the formula (IV),
R³,R⁴ are each a hydrogen atom,
B¹ is oxygen or nitrogen, preferably oxygen,
Z can be an element of main group I, II, III or IV or an element of transition groups I-VIII, or a mixture of elements from these groups, or is (NH₄),
V is an element of main group IV, V, VI or VII or an element of transition groups I-VIII,
Y is an element of main group IV, V, VI or VII or an element of transition groups I-VIII,
j,h,i are each a number in the range from 0 to 100.

4. A process as claimed in any of claims 1 to 3, wherein M, M¹ are each boron and R² is C₆-C₈-fluoroaryl, in particular a perfluorinated phenyl ring.

5. A process as claimed in any of claims 1 to 4, wherein the compound of the formula (III) used is water or an alcohol or a mixture of these.

6. A process as claimed in any of claims 1 to 5, wherein the compound of the formula (IV) is an inorganic salt in which water is present in bound form or a mixture of such salts.

7. A compound as claimed in any of claims 1 to 6, wherein the reaction temperature is in the range from 30°C to 200°C.

8. A process as claimed in any of claims 1 to 7, wherein the compound of the formula (I) is bis(pentafluorophenyl)hydroxyborane, di(phenyl)hydroxyborane, di(o-tolyl)hydroxyborane, di(p-anisyl)-hydroxyborane, di(nonafluorobiphenyl)hydroxyborane, di(trifluoromethyl)phenylhydroxyborane, di(p-biphenyl)-hydroxyborane, di(p-chlorophenyl)hydroxyborane, di(p-fluoro-1-naphthyl)phenylhydroxyborane or pentafluorophenyldihydroxyborane.

## Revendications

1. Un procédé de préparation de composés de formule (I):
(C₆R¹ ₅)₁₊ₗM(XR⁹ ₚ)₂₋ₗ (I)
où
les R¹ sont identiques ou différents, et représentent indépendamment les uns des autres un atome d'hydrogène, un atome d'halogène, un groupe hydrocarboné en C₁-C₂₀,
M est le bore,
les X sont identiques ou différents, et représentent indépendamment les uns des autres un élément des groupes principaux V ou VI du tableau périodique des éléments,
R⁹ représente un atome d'hydrogène ou un groupe d'hydrocarboné en (C₁ à C₂₀),
p est un nombre entier de 1 ou 2,
l est un nombre entier égal à 0 ou 1,
par réaction d'un composé de formule (II)
(C₆R¹ ₅)₁₊ₙM¹R² ₂₋ₙ (II)
où
R¹ représente le groupe tel que défini pour la formule (I),
M¹ est le bore,
les R² sont identiques ou différents et représentent indépendamment les uns des autres un atome d'hydrogène, un atome d'halogène, un groupe hydrocarboné en C₁-C₂₀, et
n est un nombre entier de 0 à 2,
avec un composé de Formule (III):
B¹R³R⁴ (III)
où
les R³,R⁴ sont identiques ou différents et représentent indépendamment les uns des autres un atome d'hydrogène, un atome d'halogène, un groupe hydrocarboné en C₁-C₂₀, un groupe OR⁶₂ où R⁶ est un groupe hydrocarboné en C₁-C₂₀ ou bien un ou plusieurs des restes R³, R⁴ sont un groupe -NR⁷₂ où R⁷ représente un atome d'hydrogène, un atome d'halogène, un groupe hydrocarboné en (C₁-C₂₀),
B¹ représente un élément du groupe V ou du groupe VI du tableau périodique des éléments,
ou bien à la place ou en plus avec un sel inorganique de formule générale (IV):
Zj (VYₕ)ᵢ * B¹R³R⁴ (IV)
où,
R³, R⁴ représentent un atome d'hydrogène,
B¹ représente un élément des groupes V ou VI du tableau périodique des éléments, de préférence de l'oxygène et de l'azote, plus particulièrement l'oxygène,
Z est un élément des groupes principaux I, II, III, IV ainsi qu'un élément des sous-groupes I à VIII ou est un mélange d'éléments de ces groupes ou bien est (NH₄),
V est un élément des groupes principaux IV, V, VI et VII ou un élément des sous-groupes I à VIII,
Y est un élément des groupes principaux IV, V, VI et VII ou un élément des sous-groupes I à VIII,
j, h, i sont des nombres compris entre 0 et 1000,
à des températures supérieures à la température ambiante, pour donner un composé de Formule (I).

2. Procédé selon la revendication 1, **caractérisé en ce que** dans les composés de formule (III):
les R¹, identiques ou différents, sont indépendamment les uns des autres un atome d'hydrogène, un atome d'halogène, un alkyle en (C₁-C₂₀), un aryle en (C₆-C₁₄), un alkoxy en (C₁-C₁₀), un alkényle en (C₂-C₁₀), un arylalkyle en (C₇-C₂₀), un alkylaryle en (C₇-C₂₀), un aryloxy en (C₆-C₁₀), un halogenalkyle en (C₁-C₁₀), un halogénaryle en (C₆-C₁₀), un alkinyle en (C₂-C₁₀), ou un alkylsilyle en (C₃-C₂₀),
M est le Bor,
les X identiques ou différents, représentent indépendamment les uns des autres, un atome d'oxygène et d'azote,
R⁹ est un atome d'hydrogène, un alkyle en (C₁-C₂₀), ou un aryle en (C₆-C₁₄),
p est un nombre entier de 1 ou 2,
l est un nombre entier égal à 0 ou 1,
M¹ est le bore,
les R² identiques ou différents, et représentent indépendamment les uns des autres un atome d'hydrogène, un atome d'halogène, un alkyle en (C₁-C₂₀), un aryle en (C₆-C₁₄), ou un halogenaryle en (C₆-C₁₄), et
n est un ombre entier de 0 à 2,
R³, R⁴ identiques ou différents représentent indépendamment les uns des autres un atome d'hydrogène, un atome d'halogène, un alkyle en (C₁-C₂₀), un aryle en (C₆-C₁₄), un alkoxy en (C₁-C₁₀), un alkényle en (C₂-C₁₀), un arylalkyle en (C₇-C₂₀), un alkylaryle en (C₇-C₂₀), un aryloxy en (C₆-C₁₀), un halogenalkyle en (C₁-C₁₀), un halogenaryle en (C₆-C₁₀), un alkinyle en (C₂-C₁₀), ou un alkylsilyle en (C₃-C₂₀), un groupe OR⁶₂ où R⁶ est un alkyle en (C₁-C₂₀), ou un aryle en (C₆-C₁₄), ou bien un ou plusieurs restes R³, R⁴ sont un groupe -NR⁷₂ où R⁷ représente un atome d'hydrogène, un atome d'halogène, un alkyle en (C₁-C₂₀), ou un aryle en (C₆-C₁₄),
B¹ est l'oxygène et l'azote.

3. Procédé selon la revendication 1 ou 2, **caractérisé en ce que** dans le composé de Formule (IV):
R³, R⁴ représentent un atome d'hydrogène,
B¹ est l'oxygène et l'azote, de préférence de l'oxygène,
Z est un élément des groupes principaux I, II, III, IV ainsi qu'un élément des sous-groupes I à VIII ou bien des mélanges d'éléments de ces groupes ou bien (NH₄),
V est un élément des groupes principaux IV, V, VI et VII ou d'un élément des sous-groupes I à VIII,
Y est un élément des groupes principaux IV, V, VI et VII ou un élément des sous-groupes I à VIII,
j, h, i représentent un nombre compris entre 0 et 100.

4. Procédé selon l'une des revendications 1 à 3, **caractérisé en ce que** M, M¹ représentent le Bore et R² est un groupe fluoroaryle en (C₆-C₈), en particulier un cycle phényle perfluoré.

5. Procédé selon l'une quelconque des revendications 1 à 4, **caractérisé en ce que** en tant que composé de Formule (III), on utilise de l'eau ou un alcool ainsi que leurs mélanges.

6. Procédé selon l'une des revendications 1 à 5, **caractérisés en ce qu'**en tant que composé de Formule (IV), on utilise des sels inorganiques comportant de l'eau sous forme liée ainsi que leurs mélanges.

7. Procédé selon l'une des revendications 1 à 6, **caractérisé en ce que** la température de réaction se situe dans le domaine de 30°C à 200°C.

8. Procédé selon l'une des revendications 1 à 7, **caractérisé en ce que** le composé de Formule (I) est le Bis(pentafluorophényl)-hydroxyborane, le Di(phényl)-hydroxyborane, le Di(otolyl)-hydroxyborane, le Di(p-anisyl)-hydroxyborane, le Di(nonafluoro-biphényl)-hydroxyborane, le Di(trifluorométhyl) phénylhydroxyborane, le Di(p-biphényl)-hydroxyborane, le Di(p-chlorophényl)-hydroxyborane, le Di(p-fluoro-1-Naphtyl-phényl-hydroxyborane ou le pentafluorophényl-dihydroxyborane.
